# EUROPEAN PATENT APPLICATION

(11) **EP 1 731 939 A1**
(43) Date of publication of application: **13.12.2006**
(21) Application number: 05710368.1
(22) Date of filing: 10.02.2005
(51) Int. Cl.: G02B 7/08, H04N 5/225

(54) **LENS BARREL AND IMAGING APPARATUS**

(30) Priority: 18.02.2004 JP 2004040917
(71) Applicant: SONY CORPORATION, Tokyo 141-0001 (JP)
(72) Inventor: MAKII, Tatsuo c/o Sony Corporation, Tokyo (JP)
(74) Representative: Thévenet, Jean-Bruno
(86) International application number: PCT/JP2005/002522
(87) International publication number: WO 2005/078501

(57) **Abstract**

There are provided a lens barrel assembly and an image capturing apparatus which are advantageous to increase the feeding accuracy for a movable lens and to reduce the size of a lens barrel.

Second group position detecting means (34) is provided for generating positional data corresponding to the position of a second group lens (12). The angular displacement of a second group motor (2804) is controlled in order to equalize the position of the second group lens (12) along the optical axis to a target position based on the positional data supplied from the second group position detecting means (34). If the positional data remains unchanged for a certain period of time while the second group motor (2804) is in rotation, then it is judged that the second group lens (12) is forcibly stopped against movement and the second group motor (2804) is immediately de-energized.

## Description

### Technical Field

The present invention relates to a lens barrel assembly and an image capturing apparatus.

### Background Art

Image capturing apparatus such as digital still cameras, digital video cameras, etc. have a lens barrel assembly including an imaging optical system assembled in a lens barrel.

The lens barrel assembly has a movable lens disposed in the lens barrel and movable along an optical axis thereof, but nonrotatable about the optical axis, and an actuating mechanism for moving the movable lens along the optical axis. The actuating mechanism includes an internally threaded member mounted on the movable lens, an external threaded member threaded in the internally threaded member and extending parallel to the optical axis, and urging means such as a helical spring or the like for urging the movable lens in the longitudinal direction of the external threaded member (see, for example, Japanese Patent Laid-open No. 2002-287002).

The movable lens has a detectable element, and the lens barrel has a sensor such as a photointerruptor for detecting the detectable element. When the movable lens is moved along the optical axis by the actuating mechanism, the sensor detects the detectable element and produces a detected signal, and a reference position of the movable lens is established based on the detected signal. The actuating mechanism controls the position (controls the movement) of the movable lens based on the reference position.

In the conventional lens barrel assembly, the helical spring is compressed depending on the position of the movable lens along the optical axis. The urging force of the urging means changes depending on the degree to which the helical spring is compressed. If the urging force of the urging means increases to pose an excessive load on the motor, then the angular displacement of the motor suffers an error, which tends to fail to move the movable lens accurately, and the movable lens may possibly have its feeding accuracy lowered.

When the movable lens reaches an end of the externally threaded member upon rotation of the motor and may not be further moved beyond the end of the externally threaded member, if the motor continues to rotate in the same direction for some reason, then the internally threaded member tends to stick to the externally threaded member. In order to avoid such a drawback, the externally threaded member has idle regions on its opposite ends which are of a diameter smaller than the outside diameter of the externally threaded member. The idle regions, however, takes up spaces in the direction of the optical axis, which make it difficult to reduce the size of the lens barrel assembly.

The detectable element of the movable lens and the sensor such as a photointerruptor or the like also take up spaces which also make it difficult to reduce the size of the lens barrel.

### Disclosure of Invention

The present invention has been made in view of the above problems. It is an object of the present invention to provide a lens barrel assembly and an image capturing apparatus which are advantageous to increase the feeding accuracy for a movable lens and to reduce the size of a lens barrel.

To achieve the above object, there is provided a lens barrel assembly having a movable lens disposed in a lens barrel for movement along an optical axis, an actuating mechanism for moving the movable lens along the optical axis, and control means for controlling the actuating mechanism, wherein the actuating mechanism has an externally threaded member extending parallel to the optical axis, a motor for rotating the externally threaded member, an internally threaded member nonrotatably threaded over the externally threaded member for movement along the externally threaded member into abutment against the movable lens in response to rotation of the externally threaded member, and urging means for urging the movable lens in the longitudinal direction of the externally threaded member to move into abutment against the internally threaded member, the lens barrel assembly further including position detecting means for detecting a position of the movable lens along the optical axis and generating positional data corresponding to the detected data, and wherein the control means includes a first controller for controlling an angular displacement of the motor in order to equalize the position of the movable lens along the optical axis to a target position based on the positional data supplied from the position detecting means, and a second controller for judging that the movable lens is forcibly stopped against movement and immediately de-energizing the motor if the positional data remains unchanged for a predetermined period of time while the motor is in rotation.

According to the present invention, there is also provided a lens barrel assembly having a movable lens disposed in a lens barrel for movement along an optical axis, the movable lens being nonrotatable about the optical axis, an actuating mechanism for moving the movable lens along the optical axis, and control means for controlling the actuating mechanism, wherein the actuating mechanism has an internally threaded member mounted on the movable lens, an externally threaded member threaded in the internally threaded member and extending parallel to the optical axis, a motor for rotating the externally threaded member, and urging means for urging the movable lens in the longitudinal direction of the externally threaded member, the lens barrel assembly further including position detecting means for detecting a position of the movable lens along the optical axis and generating positional data corresponding to the detected data, and wherein the control means includes a first controller for controlling an angular displacement of the motor in order to equalize the position of the movable lens along the optical axis to a target position based on the positional data supplied from the position detecting means, and a second controller for judging that the movable lens is forcibly stopped against movement and immediately de-energizing the motor if the positional data remains unchanged for a predetermined period of time while the motor is in rotation.

According to the present invention, there is further provided an image capturing apparatus including a lens barrel assembly having a movable lens disposed in a lens barrel for movement along an optical axis, an actuating mechanism for moving the movable lens along the optical axis, and control means for controlling the actuating mechanism, wherein the actuating mechanism has an externally threaded member extending parallel to the optical axis, a motor for rotating the externally threaded member, an internally threaded member nonrotatably threaded over the externally threaded member for movement along the externally threaded member into abutment against the movable lens in response to rotation of the externally threaded member, and urging means for urging the movable lens in the longitudinal direction of the externally threaded member to move into abutment against the internally threaded member, the lens barrel assembly further including position detecting means for detecting a position of the movable lens along the optical axis and generating positional data corresponding to the detected data, and wherein the control means includes a first controller for controlling an angular displacement of the motor in order to equalize the position of the movable lens along the optical axis to a target position based on the positional data supplied from the position detecting means, and a second controller for judging that the movable lens is forcibly stopped against movement and immediately de-energizing the motor if the positional data remains unchanged for a predetermined period of time while the motor is in rotation.

According to the present invention, there is further provided an image capturing apparatus including a lens barrel assembly having a movable lens disposed in a lens barrel for movement along an optical axis, the movable lens being nonrotatable about the optical axis, an actuating mechanism for moving the movable lens along the optical axis, and control means for controlling the actuating mechanism, wherein the actuating mechanism has an internally threaded member mounted on the movable lens, an externally threaded member threaded in the internally threaded member and extending parallel to the optical axis, a motor for rotating the externally threaded member, and urging means for urging the movable lens in the longitudinal direction of the externally threaded member, the lens barrel assembly further including position detecting means for detecting a position of the movable lens along the optical axis and generating positional data corresponding to the detected data, and wherein the control means includes a first controller for controlling an angular displacement of the motor in order to equalize the position of the movable lens along the optical axis to a target position based on the positional data supplied from the position detecting means, and a second controller for judging that the movable lens is forcibly stopped against movement and immediately de-energizing the motor if the positional data remains unchanged for a predetermined period of time while the motor is in rotation.

### Brief Description of Drawings

Fig. 1 is a perspective view, as viewed from front, of an image capturing apparatus according to Embodiment 1.
Fig. 2 is a perspective view, as viewed from rear, of the image capturing apparatus.
Fig. 3 is a block diagram of the image capturing apparatus.
Fig. 4 is a perspective view of a lens barrel 1.
Fig. 5 is a cross-sectional view of the lens barrel 1.
Fig. 6 is a perspective view of a second group actuating mechanism.
Fig. 7 is a block diagram of a control system for controlling a second group actuating mechanism 28 and a fourth group actuating mechanism 32.
Fig. 8 is a flowchart of a process for a controller 128 to establish a reference position of a second group lens 12.
Fig. 9 is a cross-sectional view of a lens barrel 1 according to Embodiment 2.
Fig. 10 is a cross-sectional view of a movable lens.

### Best Mode for Carrying out the Invention

The object to increase the feeding accuracy for a movable lens and to reduce the size of a lens barrel is achieved by position detecting means for detecting a position of the movable lens along the optical axis and generating positional data corresponding to the detected data, and control means including a first controller for controlling the position of the movable lens to be equalized to a target position and a second controller for judging that the movable lens is forcibly stopped against movement and immediately stopping the movable lens.

### (Embodiment 1)

Embodiment 1 of the present invention will be described below with reference to the drawings.

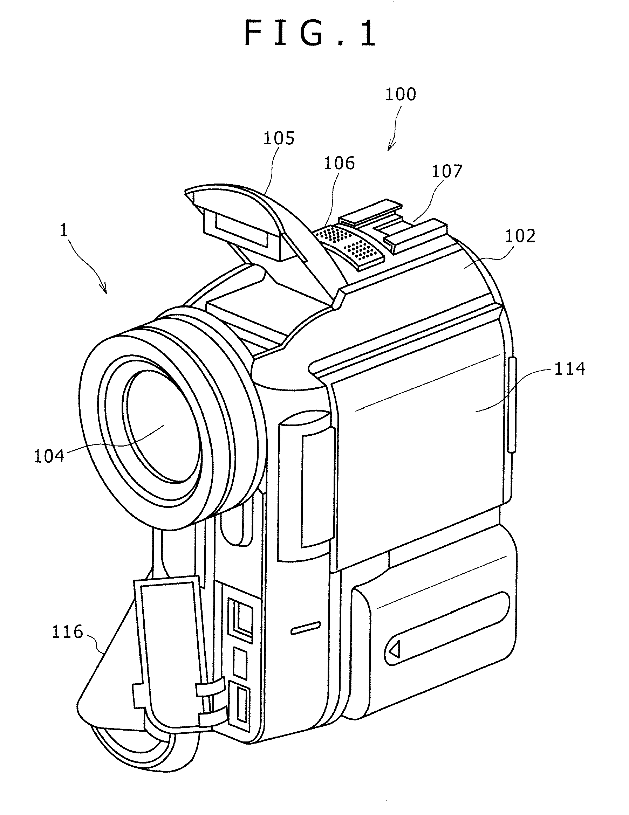

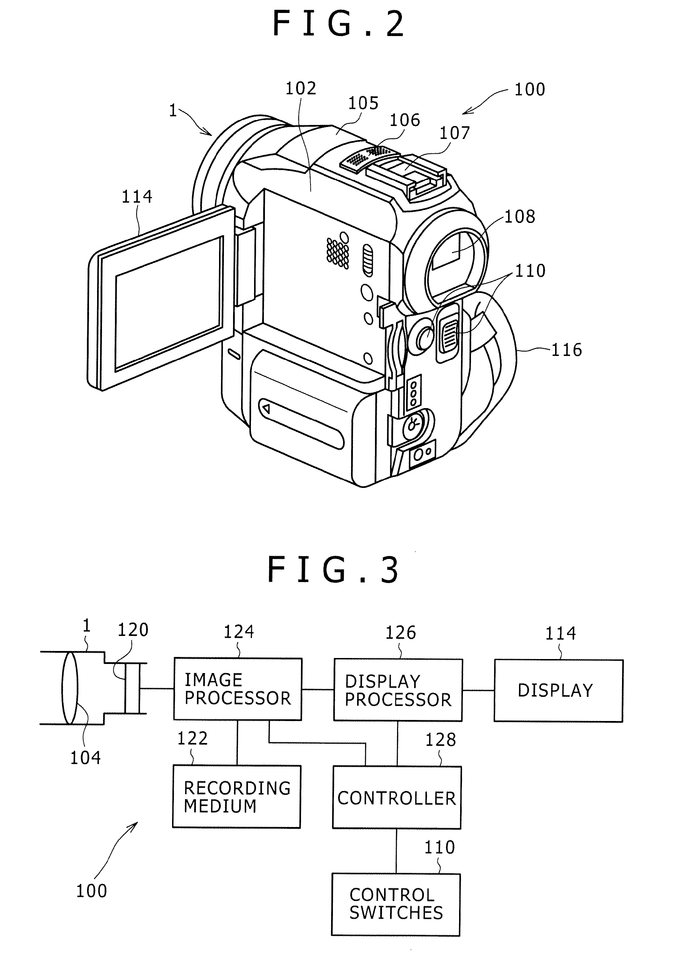

Fig. 1 is a perspective view, as viewed from front, of an image capturing apparatus according to Embodiment 1, Fig. 2 is a perspective view, as viewed from rear, of the image capturing apparatus, and Fig. 3 is a block diagram of the image capturing apparatus.

As shown in Figs. 1 and 2, an image capturing apparatus 100 according to the present embodiment includes a video camera having a case 102 as an outer housing.

A lens barrel 1 accommodating an imaging optical system 104 is mounted on an upper portion of a front surface of the case 102. On an upper surface of the case 102, there are disposed a pop-up flash unit 105 for emitting assistive light when capturing images, a microphone 106 for recording sounds, and a shoe 107 for mounting accessories, which are successively arranged in the order named from a front portion to a rear portion of the upper surface.

The case 102 has a finder eyepiece window 108 disposed on an upper portion of a rear surface thereof. A plurality of control switches 110 including a switch for starting and stopping capturing moving images, a shutter switch for capturing still images, a zooming switch, a manual focusing switch, etc. are disposed on an upper portion of the rear surface of the case 102.

A display 114 for displaying captured images is openably and closably mounted on a side surface of the case 102. A belt grip 116 for inserting a hand therein for gripping the case 102 is mounted on the other side surface of the case 102.

As shown in Fig. 3, the image capturing apparatus 100 includes an imaging device 120 such as a CCD, a CMOS sensor, or the like disposed in a rear end portion of the lens barrel 1 for capturing a subject image that has been focused by the imaging optical system 104, an image processor 124 for generating image data based on an image signal output from the imaging device 120 and recording the image data in a recording medium 122 such as a magnetic recording tape, a memory card, or the like, a display processor 126 for displaying the image data on the display 114, and a controller 128 including a CPU, etc. for controlling the image processor 124 and the display processor 126 in response to operation of the control switches 110. The controller 128 is also arranged to control zooming operation and focusing operation of the imaging optical system 104 as described later.

Structural details of the lens barrel 1 will be described below.

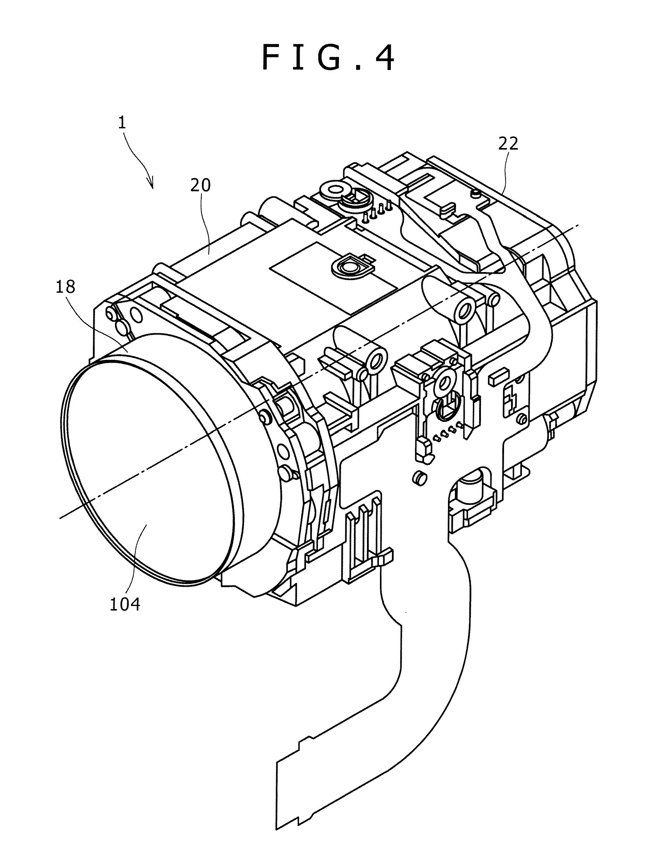

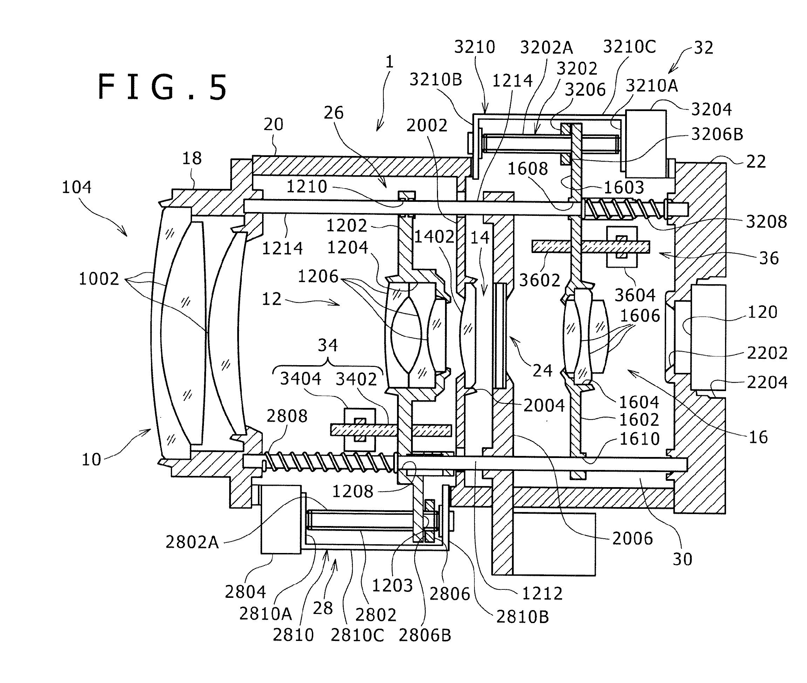

Fig. 4 is a perspective view of the lens barrel 1, and Fig. 5 is a cross-sectional view of the lens barrel 1.

As shown in Fig. 5, the imaging optical system 104 is optically constructed as an inner focus lens system made up of four lens groups. Specifically, if it is assumed that a subject side of the lens barrel 1 is referred to as a front side and an imaging device 120 side of the lens barrel 1 as a rear side along the optical axis, then the four lens groups of the imaging optical system 104 include a first group lens 10, a second group lens 12, a third group lens 14, and a fourth group lens 16 which are successively arranged in the order named from the front side toward the rear side.

The lens barrel 1 performs a zooming action when the second group lens 12 is actuated along the optical axis, and performs a focusing action when the fourth group lens 16 is slightly displaced along the optical axis. Specifically, the second group lens 12 is displaced to change the focal length, and the fourth group lens 16 is displaced to correct a focused position that is displaced by the change in the focal length, thereby properly focusing a subject image.

More specifically, the lens barrel 1 has a front lens barrel 18 housing the first group lens 10, an intermediate lens barrel 20 coupled to the rear end of the front lens barrel 18 and housing the second group lens 12, the third group lens 14, and the fourth group lens 16, and a base (rear lens barrel) 22 coupled to the rear end of the intermediate lens barrel 20 and holding the imaging device 120. The front lens barrel 18, the intermediate lens barrel 20, and the base 22 are assembled such that they have respective central axes aligned with the optical axis of the imaging optical system 104.

An intermediate wall 2002 extending in a direction perpendicular to the optical axis is disposed at an intermediate position in the intermediate lens barrel 20 along the optical axis. An aperture intermediate wall 2006 extending in the direction perpendicular to the optical axis is disposed behind the intermediate wall 2002.

The aperture intermediate wall 2006 supports an iris mechanism 24 for adjusting the amount of light which is led to the imaging device 120 by the imaging optical system 104. The iris mechanism 24 may be any of various conventional mechanisms, and will not be described in detail below as it has no bearing on the subject matter of the present invention.

The base 22 is in the form of a thick plate and has an opening 2202 defined therein on the optical axis thereof. The base 22 also has a recess 2204 defined in a rear surface thereof which faces forwardly through the opening 2202. The imaging device 120 is highly accurately positioned and fixed in the recess 2204 with its imaging surface facing forwardly through the opening 2202. An optical filter such as an optical low-pass cut filter, an infrared cut filter, or the like is disposed in front of the imaging surface of the imaging device 120.

The first group lens 10 includes three lenses 1002 housed in and secured to the front lens barrel 18.

The third group lens 14 includes a single lens 1402 housed in and secured to a lens chamber 2004 in the intermediate wall 2002.

As described later, the second group lens 12 is disposed between the first group lens 10 and the third group lens 14, and the fourth group lens 16 is disposed between the iris mechanism 24 and the imaging device 120.

Principal components of the image capturing apparatus according to the present embodiment will be described below.

First, structural details of the second group lens 12, a second group guiding mechanism 26, and a second group actuating mechanism 28 will be described below.

The second group lens 12 includes a second group lens frame 1202 in the form of an annular plate, a lens housing chamber 1204 provided as a central opening in the second group lens frame 1202, and three lenses 1206 housed in and fixed to the lens housing chamber 1204.

The second group lens frame 1202 has a first bearing 1208 and a second bearing 1210 which are disposed in radially outer positions thereof and circumferentially spaced from each other.

First and second guide shafts 1212, 1214 extending parallel to the optical axis are inserted respectively through the first bearing 1208 and the second bearing 1210. Each of the first and second guide shafts 1212, 1214 is in the form of a cylindrical rod having a constant outside diameter and has opposite ends attached respectively to the front lens barrel 18 and the base 22. In the present embodiment, the first and second guide shafts 1212, 1214 extend through the intermediate wall 2002 and the aperture intermediate wall 2006, and also through a first bearing 1608 and a second bearing 1610 of a fourth lens frame 1602.

In the present embodiment, the first and second guide shafts 1212, 1214, the first bearing 1208, and the second bearing 1210 make up the second group guiding mechanism 26 for guiding the second group lens 12 reciprocally linearly along the optical axis.

The second group actuating mechanism 28 serves to move the second group lens 12 along the optical axis. The second group actuating mechanism 28 includes an externally threaded member 2802 extending parallel to the optical axis, a second group motor 2804 such as a stepping motor or the like for rotating the externally threaded member 2802, an internally threaded member 2806 nonrotatably threaded over the externally threaded member 2802 for movement along the externally threaded member 2802 into abutment against the second group lens 12 in response to rotation of the externally threaded member 2802, and a helical spring 2808 (corresponding to urging means in claims) for urging the second group lens 12 in the longitudinal direction of the externally threaded member 2802 to move into abutment against the internally threaded member 2806. In the present embodiment, the externally threaded member 2802 and the internally threaded member 2806 are made of a metal material.

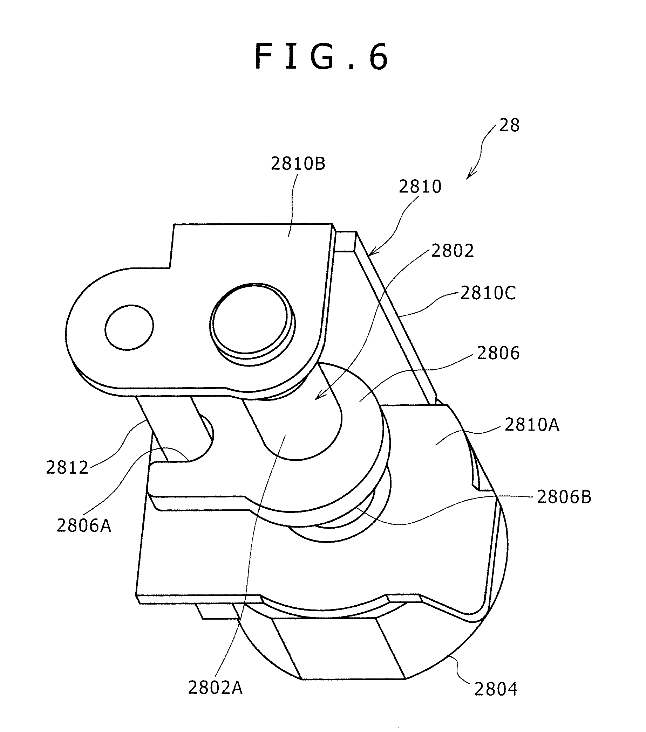

As shown in Fig. 6, the second group motor 2804 is mounted on a motor mount 2810, and the externally threaded member 2802 is coupled to the second group motor 2804.

The motor mount 2810 includes a first support arm 2810A mounted on an end face of the case of the second group motor 2804, a second support arm 2810B confronting the first support leg 2810A, and a third support arm 2810C interconnecting the first support arm 2810A and the second support arm 2810B.

The third support arm 2810C extends from the proximal end of the first support arm 2810A, and the second support arm 2810B is disposed on the distal end of the third support arm 2810C.

The externally threaded member 2802 has a distal end (a forward end along the optical axis of the second group lens 12) rotatably supported in a bearing hole in the second support arm 2810B.

Between the first and second support arms 2810A, 2810B of the motor mount 2810, there is disposed a rod 2812 for preventing the internally threaded member 2806 from rotating, the rod 2812 being spaced from and extending parallel to the externally threaded member 2802.

The internally threaded member 2806 is threaded over the externally threaded member 2802, and has an engaging recess 2806A engaging the rod 2812 for preventing the internally threaded member 2806 from rotating. When the externally threaded member 2802 is rotated in one direction and the other, the internally threaded member 2806 is reciprocally moved along the longitudinal direction of the externally threaded member 2802.

The internally threaded member 2806 has an end 2806B positioned rearwardly of the second group lens 12 along the optical axis. The end 2806B is engageable with an engaging portion 1203 of the outer circumferential region of the second lens frame 1202.

The externally threaded member 2802 has external threads 2802A disposed over substantially the full length thereof and held in mesh with the internally threaded member 2806.

The second group actuating mechanism 28 is assembled in a front region of the intermediate lens barrel 20 such that the distal end of the externally threaded member 2802 is oriented rearwardly along the optical axis and the second group motor 2804 is oriented forwardly along the optical axis.

The helical spring 2808 is coiled around the first guide shaft 1212, and has an end resiliently held against the first bearing 1208 of the second group lens frame 1202 and the other end resiliently held against the front lens barrel 18. The helical spring 2808 normally urges the second group lens frame 1202 to cause the engaging portion 1203 to abut against the end 2806B of the internally threaded member 2806. Stated otherwise, the helical spring 2808 normally urges the second group lens frame 1202 forwardly along the optical axis into resilient abutment against the internally threaded member 2806.

Therefore, the second group lens frame 1202, i.e., the second group lens 12, move reciprocally linearly along the optical axis in response to movement of the internally threaded member 2806.

If it is assumed that when the second group motor 2804 rotates in one direction, the internally threaded member 2806 moves forwardly along the optical axis, and when the second group motor 2804 rotates in the opposite direction, the internally threaded member 2806 moves rearwardly along the optical axis, then the second group lens 12 moves linearly forwardly and rearwardly along the optical axis in response to movement of the internally threaded member 2806.

When the externally threaded member 2802 continues to rotate in one direction, the surface of the engaging portion 1203 of the second group lens frame 1202 which faces forwardly along the optical axis reaches a forward limit position in which it abuts against the first support arm 2810A of the motor mount 2810. When the externally threaded member 2802 continues to rotate in the opposite direction, the surface of the end 2806B of the externally threaded member 2802 which faces rearwardly along the optical axis reaches a rearward limit position in which it abuts against the second support arm 2810B of the motor mount 2810. Consequently, the second group lens 12 is movable within a range between the forward limit position and the rearward limit position.

The second group actuating mechanism 28 also has second group position detecting means 34 for detecting the position of the second group lens 12 along the optical axis and generating positional data corresponding to the detected position.

Specifically, the second group position detecting means 34 has a magnet 3402 mounted on the second group lens frame 1202 and a magnetoresistive device (hereinafter referred to as MR device) 3404 mounted on the intermediate lens barrel 20.

The magnet 3402 is in the form of a rod extending parallel to the optical axis, and is magnetized into an alternate array of S poles and N poles arranged at small intervals ranging from 150 to 400 µm, for example, in the direction in which the magnet 3402 extends.

The MR device 3404 is disposed in confronting relation to the magnet 3402 with a predetermined gap provided therebetween. The MR device 3404 has its resistance value variable depending on the magnetic field generated by the magnet 3402 as it moves. Based on the change in the resistance, the MR device 3404 produces a detected positional signal (positional data) corresponding to the position of the magnet 3402, or in other words, the position of the second group lens 12 along the optical axis.

An arrangement for detecting a position using a magnet and an MR device is disclosed in Japanese Patent No. 3259316, for example.

The fourth group lens 16, a fourth group guiding mechanism 30, and a fourth group actuating mechanism 32 will be described below.

Since the fourth group lens 16, the fourth group guiding mechanism 30, and the fourth group actuating mechanism 32 are structurally similar to the second group lens 12, the second group guiding mechanism 26, and the second group actuating mechanism 28, they will be briefly described below.

The fourth group lens 16 includes a fourth group lens frame 1602, a lens housing chamber 1404 provided in the fourth group lens frame 1602, and two lenses 1606 housed in and fixed to the lens housing chamber 1604.

The first and second guide shafts 1212, 1214 and the first and second bearings 1608, 1610 make up the fourth group guiding mechanism 30 for guiding the fourth group lens 16 reciprocally linearly along the optical axis.

The fourth group actuating mechanism 32 serves to move the fourth group lens 16 along the optical axis. The fourth group actuating mechanism 32 includes an externally threaded member 3202, a fourth group motor 3204 for rotating the externally threaded member 3202, an internally threaded member 3206 nonrotatably threaded over the externally threaded member 3202 for movement along the externally threaded member 3202 into abutment against the fourth group lens 16 in response to rotation of the externally threaded member 3202, and a helical spring 3208 (corresponding to urging means in claims) for urging the fourth group lens 16 in the longitudinal direction of the externally threaded member 3202 to move into abutment against the internally threaded member 3206. In the present embodiment, the externally threaded member 3202 and the internally threaded member 3206 are made of a metal material.

The fourth group motor 3204 is mounted on a motor mount 3210, and the externally threaded member 3202 is coupled to the fourth group motor 3204.

As with the motor mount 2810 described above, the motor mount 3210 includes first and second support arms 3210A, 3210B and a third support arm 3210C interconnecting the first and second support arms 3210A, 3210B. The externally threaded member 3202 has a distal end (a rearward end along the optical axis of the fourth group lens 16) rotatably supported in a bearing hole in the second support arm 3210B.

Between the first and second support arms 3210A, 3210B of the motor mount 3210, there is disposed a rod (not shown) for preventing the internally threaded member 3206 from rotating. The rod prevents the internally threaded member 3206 from rotating. When the externally threaded member 3202 is rotated in one direction and the other, the internally threaded member 3206 is reciprocally moved along the longitudinal direction of the externally threaded member 3202.

The internally threaded member 3206 has an end 3206B positioned forwardly of the fourth group lens 16 along the optical axis. The end 3206B is engageable with an engaging portion 1603 of the outer circumferential region of the fourth lens frame 1602.

The externally threaded member 3202 has external threads 3202A disposed over substantially the full length of the direction in which the externally threaded member 3202 extends and held in mesh with the internally threaded member 3206.

The fourth group actuating mechanism 32 is assembled in a rear region of the intermediate lens barrel 20 such that the distal end of the externally threaded member 3202 is oriented forwardly along the optical axis and the fourth group motor 3204 is oriented rearwardly along the optical axis.

The helical spring 3208 is coiled around the second guide shaft 1214, and has an end resiliently held against the first bearing 1608 of the fourth group lens frame 1602 and the other end resiliently held against the base 22. The helical spring 3208 normally urges the fourth group lens frame 1602 to cause the engaging portion 1603 to abut against the end 3206B of the internally threaded member 3206. Stated otherwise, the helical spring 3208 normally urges the fourth group lens frame 1602 forwardly along the optical axis into resilient abutment against the internally threaded member 3206.

Therefore, the fourth group lens frame 1602, i.e., the fourth group lens 16, move reciprocally linearly along the optical axis in response to movement of the internally threaded member 3206.

If it is assumed that when the fourth group motor 3204 rotates in one direction, the internally threaded member 3206 moves forwardly along the optical axis, and when the fourth group motor 3204 rotates in the opposite direction, the internally threaded member 3206 moves rearwardly along the optical axis, then the fourth group lens 16 moves linearly forwardly and rearwardly along the optical axis in response to the movement of the internally threaded member 3206.

When the externally threaded member 3202 continues to rotate in one direction, the surface of the end 3206B of the externally threaded member 3202 which faces rearwardly along the optical axis reaches a forward limit position in which it abuts against the second support arm 3210B of the motor mount 3210. When the externally threaded member 3202 continues to rotate in the opposite direction, the surface of the engaging portion 1603 of the fourth group lens frame 1602 which faces rearwardly along the optical axis reaches a rearward limit position in which it abuts against the first support arm 3210A of the motor mount 3210. Consequently, the fourth group lens 16 is movable within a range between the forward limit position and the rearward limit position.

The fourth group actuating mechanism 32 also has fourth group position detecting means 36 for detecting the position of the fourth group lens 16 along the optical axis and generating positional data corresponding to the detected position.

Specifically, the fourth group position detecting means 36, which is of the same structure as the second group position detecting means 36, has a magnet 3602 mounted on the fourth group lens frame 1602 and an MR device 3604 mounted on the intermediate lens barrel 20. The MR device 3604 produces a detected positional signal (positional data) corresponding to the position of the fourth group lens 16 along the optical axis.

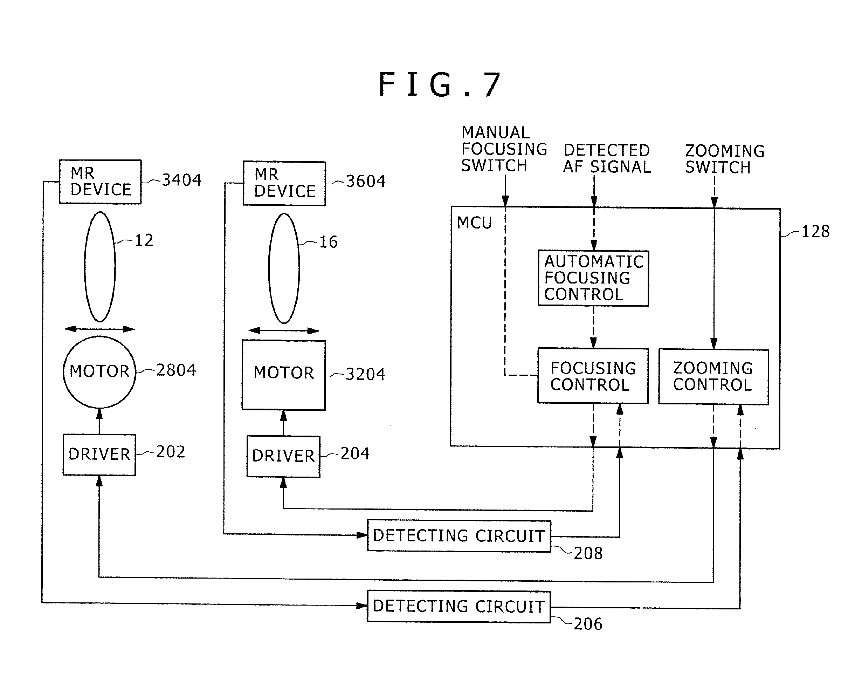

The configuration of a control system for controlling the second group actuating mechanism 28 and the fourth group actuating mechanism 32 will be described below with reference to Fig. 7.

The controller 128 controls the rotation in one direction and the other, the angular displacement, the rotational speed, and the output torque of the second group motor 2804 through a second group driver 202, and also controls the rotation in one direction and the other, the angular displacement, the rotational speed, and the output torque of the fourth group motor 3204 through a fourth group driver 204.

In the present embodiment, the second group motor 2804 and the fourth group motor 3204 include stepping motors. Therefore, the controller 128 controls the rotation in one direction and the other, the angular displacement, the rotational speeds, and the output torques of the second group motor 2804 and the fourth group motor 3204 by controlling the sequence in which respective drive signals are supplied from the second group driver 202 and the fourth group driver 204 to the second group motor 2804 and the fourth group motor 3204, the numbers of pulses of the drive signals, the frequencies thereof, and the duty ratios thereof.

The controller 128 is supplied with a detected positional signal representing the position of the second group lens 12 from the MR device 3404 through a second group detecting circuit 206, and is also supplied with a detected positional signal representing the position of the fourth group lens 16 from the MR device 3604 through a fourth group detecting circuit 208. The controller 128 recognizes positional data of the second group lens 12 and the fourth group lens 16 based on these detected positional signals.

The controller 128 controls the second group driver 202 depending on the positional data of the second group lens 12 which is supplied from the second group detecting circuit 206 and a zoom signal supplied from the zooming switch, fourthereby moving the second group lens 12 forwardly or rearwardly along the optical axis to perform zooming operation (zoom control).

Stated otherwise, the controller 128 controls the direction in which the second group motor 2804 rotates and the angular displacement of the second group motor 2804 under feedback control in order to equalize the position of the second group lens 12 along the optical axis to a target position based on the positional data.

The controller 128 also controls the fourth group driver 204 depending on the positional data of the fourth group lens 16 which is supplied from the fourth group detecting circuit 208 and a focus control signal, fourthereby moving the fourth group lens 16 forwardly and rearwardly along the optical axis to perform focusing operation (focus control). The focus control signal includes a focusing signal supplied from the manual focusing switch in a manual focusing mode and a detected automatic focus signal generated in an automatic focusing mode to be described below.

Stated otherwise, the controller 128 controls the direction in which the fourth group motor 3204 rotates and the angular displacement of the fourth group motor 3204 under feedback control in order to equalize the position of the fourth group lens 16 along the optical axis to a target position based on the positional data.

Automatic focusing operation of the controller 128 for automatically focusing the fourth group lens will be described below.

The detected automatic focus signal is generated by the controller 128 based on a contrast evaluation signal for an image signal which is generated by the image processor 124 based on a captured image signal output from the imaging device 120.

The contrast evaluation signal has a peak value when a subject image captured by the fourth group lens 16 is focused on the imaging device 120. If the position of the fourth group lens 16 along the optical axis when the contrast evaluation signal has a peak value is referred to as a focused position, then as the fourth group lens 16 is moved forwardly or rearwardly along the optical axis away from the focused position, the contrast evaluation signal has its level progressively lowered from the peak value.

The focusing operation is performed by the controller 128 based on the above properties of the contrast evaluation signal according to one of the following processes.

According to a first process, the fourth group lens 16 is moved reciprocally a short distance (wobbled) along the optical axis, and is stopped when the contrast evaluation signal reaches the peak value.

According to a second process, the fourth group lens 16 is moved from a rear position to a front position along the optical axis, and the position of the fourth group lens 16 (the angular position of the fourth group motor 3204) at the time the contrast evaluation signal reaches the peak value is stored. Then, the fourth group lens 16 is moved from the front position to the stored position.

According to a third process, the fourth group lens 16 is moved from a rear position to a front position along the optical axis, and the position of the fourth group lens 16 (the angular position of the fourth group motor 3204) at the time the contrast evaluation signal reaches the peak value is stored. Then, the fourth group lens 16 is moved from the front position through the stored position to the rear position, and is moved again from the rear position to the stored position. The third process is advantageous to avoid a hysteresis error of the fourth group lens 16 which occurs when the fourth group lens 16 is reciprocally moved along the optical axis according to the second process.

If the positional data of the second group lens 12 remains unchanged for a certain period of time while the second group motor 2804 is in rotation, then the controller 128 judges that the second group lens 12 is forcibly stopped against movement, and immediately controls the second group driver 202 to de-energize the second group motor 2804.

If the positional data of the fourth group lens 16 remains unchanged for a certain period of time while the fourth group motor 3204 is in rotation, then the controller 128 judges that the fourth group lens 16 is forcibly stopped against movement, and immediately controls the fourth group driver 204 to de-energize the fourth group motor 3204.

In the present embodiment, the second group lens 12 and the fourth group lens 16 make up a movable lens in the claims, and the lens barrel 1, the first group lens 10, the second group lens 12, the third group lens 14, the fourth group lens 16, the second group guiding mechanism 26, the second group actuating mechanism 28, the second group position detecting means 34, the fourth group guiding mechanism 30, the fourth group actuating mechanism 32, and the fourth group position detecting means 36 make up a lens barrel assembly according to the present invention. The controller 128 serves as a first controller and a second controller in the claims.

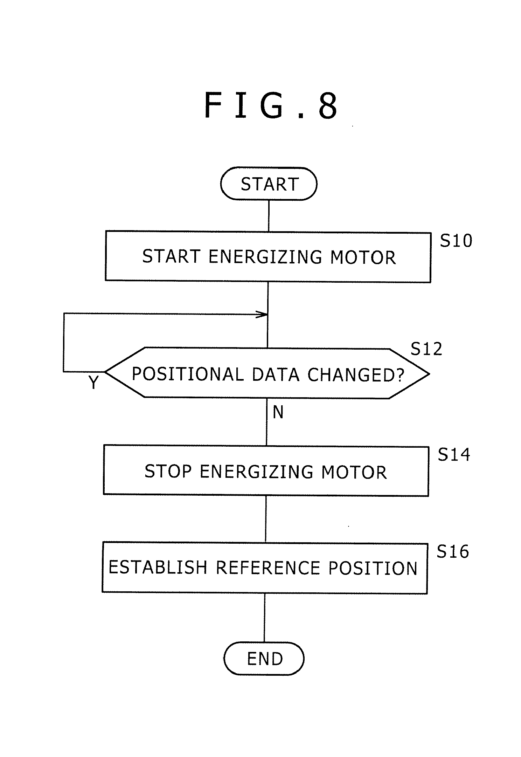

A process performed by the controller 128 to establish the reference position of the second group lens 12 will be described below with reference to Fig. 8.

The reference position is established when the power supply of the image capturing apparatus 100 is turned on or the image capturing apparatus 100 is set in an imaging mode, for example.

The controller 128 controls the second group driver 202 to rotate the second group motor 2804 in one direction or the other (step S10).

The controller 128 monitors the positional data of the second group lens 12 which is supplied from the second group detecting circuit 206. The controller 128 determines whether the positional data has changed in a predetermined period of time or not (step S12).

If it is judged in step S12 that the positional data has changed in the predetermined period of time, then since the second group lens 12 has moved, control returns to step S12 to continuously rotate the second group motor 2804.

If it is judged in step S12 that the positional data has not changed in the predetermined period of time, then the controller 128 judges that the second group lens 12 is forcibly stopped against movement, and immediately controls the second group driver 202 to de-energize the second group motor 2804 (step S14). At this time, the second group lens 12 is reliably positioned in the forward limit position or the rearward limit position.

The controller 128 sets the positional data at the time the second group motor 2804 is de-energized as a reference position for a distance over which the second group lens 12 is to move along the optical axis or a position to which the second group lens 12 is to move along the optical axis (step S16). Then, the process of establishing the reference position is put to an end.

Subsequently, the controller 128 controls the direction in which the second group motor 2804 rotates and the angular displacement of the second group motor 2804 fourthereby performing the zooming operation in order to equalize the position of the second group lens 12 along the optical axis to a target position based on the reference position and the positional data.

A process performed by the controller 128 to establish the reference position of the fourth group lens 16 is the same as the process described above, and hence will not be described below. After having finished the process of establishing the reference position of the fourth group lens 16, the controller 128 controls the direction in which the fourth group motor 3204 rotates and the angular displacement of the fourth group motor 3204 fourthereby performing the focusing operation in order to equalize the position of the fourth group lens 16 along the optical axis to a target position based on the reference position and the positional data.

According to the present embodiment, the second group position detecting means 34 is provided for generating positional data corresponding to the position of the second group lens 12 along the optical axis. The angular displacement of the second group motor 2804 is controlled in order to equalize the position of the second group lens 12 along the optical axis to the target position based on the positional data supplied from the second group position detecting means 34. If the positional data remains unchanged for a certain period of time while the second group motor 2804 is in rotation, then it is judged that the second group lens 12 is forcibly stopped against movement, and the second group motor 2804 is immediately de-energized.

Furthermore, the fourth group position detecting means 36 is provided for generating positional data corresponding to the position of the fourth group lens 16 along the optical axis. The angular displacement of the fourth group motor 3204 is controlled in order to equalize the position of the fourth group lens 16 along the optical axis to the target position based on the positional data supplied from the fourth group position detecting means 36. If the positional data remains unchanged for a certain period of time while the fourth group motor 3204 is in rotation, then it is judged that the fourth group lens 16 is forcibly stopped against movement, and the fourth group motor 3204 is immediately de-energized.

Therefore, when the helical springs 2808, 3208 are compressed depending on the position along the optical axis of the second group lens 12 or the fourth group lens 16, if the urging forces of the helical springs 2808, 3208 are increased to place an excessive load on the second group motor 2804 or the fourth group motor 3204, the second group lens 12 or the fourth group lens 16 can be moved to an accurate position, and hence the feeding accuracy fourth lenses is increased.

Particularly, an increase in the feeding accuracy four the second group lens 12 is advantageous to quickly and accurately set the zooming ratio of the imaging optical system 104 to a desired value. Also, an increase in the feeding accuracy fourth group lens 16 is also advantageous to quickly and accurately perform focusing.

Furthermore, since the second group motor 2804 or the fourth group motor 3204 is immediately de-energized when the second group lens 12 or the fourth group lens 16 reaches the forward limit position or the rearward limit position, the internal threads of the internally threaded member are reliably prevented from sticking to the internal threads of the externally threaded member when the externally threaded member continues to rotate while the internally threaded member is at rest. Therefore, the externally threaded member does not need to have the conventional idle regions, and hence the lens barrel can be reduced in size by the spaces occupied by the idle regions.

In addition, as the idle regions are not required, the externally threaded member may have external threads over substantially the full length thereof. With this arrangement, the second group lens 12 or the fourth group lens 16 may be moved in a range close to the full length of the direction in which the externally threaded member extends, resulting in an advantage to provide a displacement stroke fourth second group lens 12 or the fourth group lens 16.

The positional data at the time the second group motor 2804 or the fourth group motor 3204 is de-energized is set as a reference position for a distance over which the second group lens 12 or the fourth group lens 16 is to move along the optical axis or a position to which the second group lens 12 or the fourth group lens 16 is to move along the optical axis. Consequently, a detectable element or a sensor such as a photointerruptor which has heretofore been required to establish the reference position may be dispensed with, and the lens barrel may be reduced in size by the space occupied by the detectable element or the sensor.

The imaging optical system 104 such as an inner focus lens according to the present embodiment, for example, is required to provide a large displacement stroke fourth second group lens 12 for achieving a high zooming ratio. However, the large displacement stroke increases the urging forces produced by the helical spring as it is compressed, greatly affecting the feeding accuracy fourth lens and increasing the dimension of the lens barrel assembly along the optical axis. According to the present invention, the above drawbacks are eliminated, resulting in advantages to increase the feeding accuracy fourth lens and to reduce the size of the lens barrel assembly.

### (Embodiment 2)

### Embodiment 2 will be described below.

Embodiment 2 differs from Embodiment 1 in that the imaging optical system includes a collapsible lens.

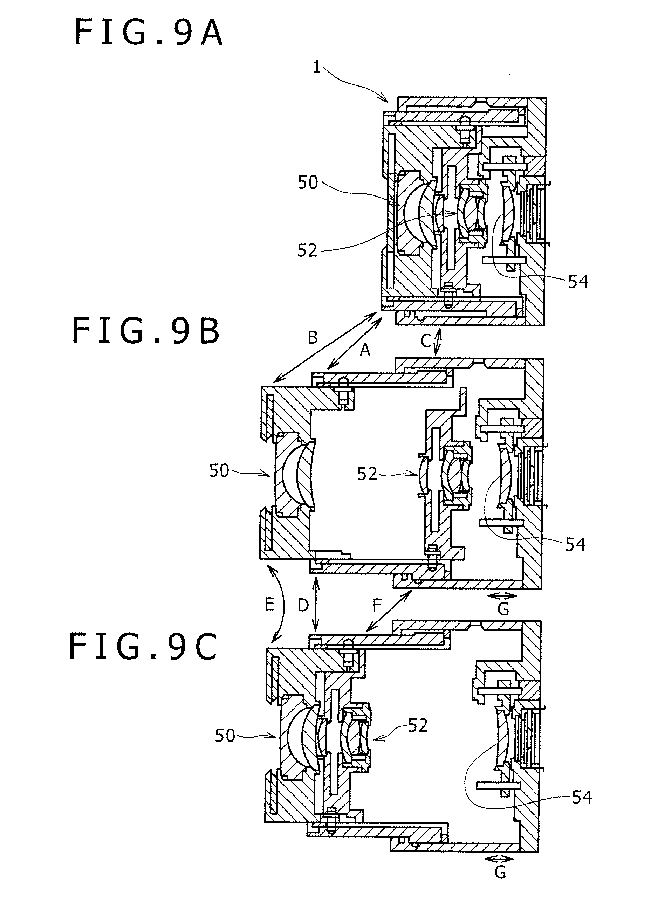

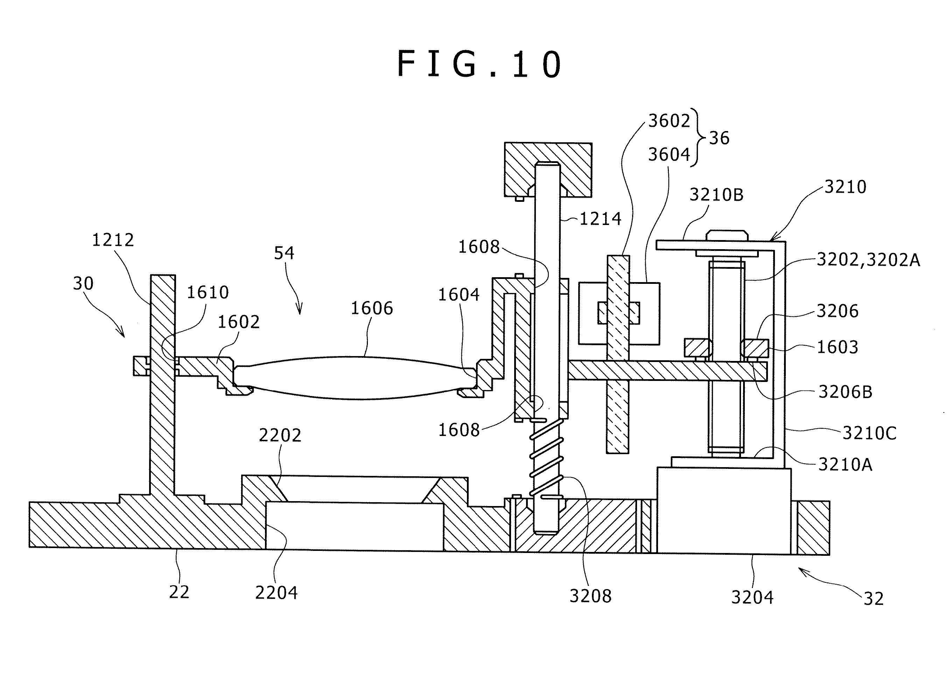

Figs. 9A through 9C are cross-sectional views of a collapsible lens. Fig. 9A shows the collapsible lens in a collapsed state. Fig. 9B shows the collapsible lens in a wide-angle state. Fig. 9C shows the collapsible lens in a telephoto state. Fig. 10 is a cross-sectional view of a movable lens. Those portions and parts shown in Figs. 9A through 9C and Fig. 10 which are identical to those according to Embodiment 1 are denoted by identical reference characters, and will not be described in detail below.

As shown in Figs. 9A through 9C, the imaging optical system housed in the lens barrel 1 is of a three-group configuration including a first group lens 50, a second group lens 52, and a third group lens 54 that are successively arranged in the order named from the front side toward the rear side.

The lens barrel 1 performs zooming when the first group lens 50 and the second group lens 52 are actuated along the optical axis according to a certain cam curve by a moving mechanism having cam rings and cam grooves, and performs focusing when the third group lens 54 serving as a movable lens according to the present invention is slightly displaced along the optical axis. Specifically, the lens barrel 1 is arranged such that the first group lens 50 and the second group lens 52 are slightly displaced to change the focal length, and the third group lens 54 is displaced to correct a focused position that is displaced by the change in the focal length, thereby properly focusing a subject image.

As shown in Fig. 10, the third lens group 54 corresponds to the fourth group lens 16 according to Embodiment 1, and the lens barrel has a guiding mechanism 30 for guiding the third lens group 54 along the optical axis and an actuating mechanism 32 for moving the third group lens along the optical axis. The guiding mechanism 30 and the actuating mechanism 32 are essentially the same structure as the fourth group guiding mechanism 30 and the fourth group actuating mechanism 32 according to Embodiment 1.

The collapsible lens also offers the same operation and advantages as with Embodiment 1.

According to Embodiments 1, 2, the actuating mechanism for moving the movable lens along the optical axis has the internally threaded member that is separate from the movable lens and the urging means for urging the movable lens in the longitudinal direction of the external threaded member into abutment against the internally threaded member. However, the actuating mechanism may be constructed as follows.

The actuating means has an internally threaded member on the movable lens, an externally threaded member threaded in the internally threaded member and extending parallel to the optical axis, a motor for rotating the externally threaded member, and urging means for urging the movable lens in the longitudinal direction of the external threaded member.

The above arrangement is also capable of offering the same operation and advantages as described above.

According to Embodiments 1, 2, the position detecting means has the magnet and the MR device. However, the position detecting means is not limited to those components, but may include a position detecting sensor having a magnet and a Hall device or any of various conventional position detecting sensors.

According to Embodiments 1, 2, a video camera has been described as the image capturing apparatus. However, the present invention is applicable to a digital still camera or any of various other image capturing apparatus.

### Industrial Applicability

According to the present invention, since the first controller controls the angular displacement of the motor in order to equalize the position along the optical axis of the movable lens to a target position based on the positional data supplied from the position detecting means, even if the urging forces of the urging means are increased depending on the position along the optical axis of the movable lens, posing an excessive load on the motor, the movable lens can be moved to an accurate position, and hence the feeding accuracy fourth movable lens is increased.

Furthermore, since the second controller judges that the movable lens is forcibly stopped against movement and immediately de-energizes the motor when the positional data remains unchanged for a certain period of time while the motor is in rotation, the internal threads of the internally threaded member are reliably prevented from sticking to the internal threads of the externally threaded member when the externally threaded member continues to rotate while the internally threaded member is at rest. Therefore, the externally threaded member does not need to have the conventional idle regions, and hence the lens barrel can be reduced in size by the spaces occupied by the idle regions.

## Claims

1. A lens barrel assembly having a movable lens disposed in a lens barrel for movement along an optical axis, an actuating mechanism for moving said movable lens along the optical axis, and control means for controlling said actuating mechanism,
wherein said actuating mechanism has an externally threaded member extending parallel to said optical axis, a motor for rotating said externally threaded member, an internally threaded member nonrotatably threaded over said externally threaded member for movement along said externally threaded member into abutment against said movable lens in response to rotation of said externally threaded member, and urging means for urging said movable lens in the longitudinal direction of said externally threaded member to move into abutment against said internally threaded member;
said lens barrel assembly further comprising position detecting means for detecting a position of said movable lens along the optical axis and generating positional data corresponding to the detected data; and
wherein said control means comprises a first controller for controlling an angular displacement of said motor in order to equalize the position of said movable lens along the optical axis to a target position based on said positional data supplied from said position detecting means, and a second controller for judging that said movable lens is forcibly stopped against movement and immediately de-energizing said motor if said positional data remains unchanged for a predetermined period of time while said motor is in rotation.

2. A lens barrel assembly having a movable lens disposed in a lens barrel for movement along an optical axis, said movable lens being nonrotatable about said optical axis, an actuating mechanism for moving said movable lens along the optical axis, and control means for controlling said actuating mechanism,
wherein said actuating mechanism has an internally threaded member mounted on said movable lens, an externally threaded member threaded in said internally threaded member and extending parallel to the optical axis, a motor for rotating said externally threaded member, and urging means for urging said movable lens in the longitudinal direction of said externally threaded member;
said lens barrel assembly further comprising position detecting means for detecting a position of said movable lens along the optical axis and generating positional data corresponding to the detected data; and
wherein said control means comprises a first controller for controlling an angular displacement of said motor in order to equalize the position of said movable lens along the optical axis to a target position based on said positional data supplied from said position detecting means, and a second controller for judging that said movable lens is forcibly stopped against movement and immediately de-energizing said motor if said positional data remains unchanged for a predetermined period of time while said motor is in rotation.

3. The lens barrel assembly according to claim 1 or 2,
wherein said second controller establishes said positional data when said motor is de-energized as a reference position for a distance over which said movable lens is to move along the optical axis or a position to which said movable lens is to move along the optical axis.

4. The lens barrel assembly according to claim 1 or 2, further comprising:
a guiding mechanism disposed in said lens barrel for guiding said movable lens along the optical axis, said guiding mechanism having a guide shaft extending along the optical axis and engaging in a bearing on said movable lens for guiding said movable lens along the optical axis, said urging means including a helical spring coiled around said guide shaft and having an end resiliently held against said bearing and the other end resiliently held against said lens barrel.

5. An image capturing apparatus including a lens barrel assembly having a movable lens disposed in a lens barrel for movement along an optical axis, an actuating mechanism for moving said movable lens along the optical axis, and control means for controlling said actuating mechanism,
wherein said actuating mechanism has an externally threaded member extending parallel to said optical axis, a motor for rotating said externally threaded member, an internally threaded member nonrotatably threaded over said externally threaded member for movement along said externally threaded member into abutment against said movable lens in response to rotation of said externally threaded member, and urging means for urging said movable lens in the longitudinal direction of said externally threaded member to move into abutment against said internally threaded member;
said lens barrel assembly further comprising position detecting means for detecting a position of said movable lens along the optical axis and generating positional data corresponding to the detected data; and
wherein said control means comprises a first controller for controlling an angular displacement of said motor in order to equalize the position of said movable lens along the optical axis to a target position based on said positional data supplied from said position detecting means, and a second controller for judging that said movable lens is forcibly stopped against movement and immediately de-energizing said motor if said positional data remains unchanged for a predetermined period of time while said motor is in rotation.

6. An image capturing apparatus including a lens barrel assembly having a movable lens disposed in a lens barrel for movement along an optical axis, said movable lens being nonrotatable about said optical axis, an actuating mechanism for moving said movable lens along the optical axis, and control means for controlling said actuating mechanism,
wherein said actuating mechanism has an internally threaded member mounted on said movable lens, an externally threaded member threaded in said internally threaded member and extending parallel to the optical axis, a motor for rotating said externally threaded member, and urging means for urging said movable lens in the longitudinal direction of said externally threaded member;
said lens barrel assembly further comprising position detecting means for detecting a position of said movable lens along the optical axis and generating positional data corresponding to the detected data; and
wherein said control means comprises a first controller for controlling an angular displacement of said motor in order to equalize the position of said movable lens along the optical axis to a target position based on said positional data supplied from said position detecting means, and a second controller for judging that said movable lens is forcibly stopped against movement and immediately de-energizing said motor if said positional data remains unchanged for a predetermined period of time while said motor is in rotation.
